(19) Europäisches Patentamt / European Patent Office / Office européen des brevets

(11) EP 2 576 664 B1

(12) # FASCICULE DE BREVET EUROPEEN

(45) Date de publication et mention de la délivrance du brevet:
**24.09.2014 Bulletin 2014/39**

(21) Numéro de dépôt: **11721310.8**

(22) Date de dépôt: **24.05.2011**

(51) Int Cl.:
***C08J 3/20*** *(2006.01)*

(86) Numéro de dépôt international:
**PCT/EP2011/058486**

(87) Numéro de publication internationale:
**WO 2011/151228 (08.12.2011 Gazette 2011/49)**

(54) **PROCEDE D'OBTENTION D'UNE COMPOSITION DE CAOUTCHOUC COMPRENANT UNE CHARGE THERMOPLASTIQUE**

VERFAHREN ZUM ERHALT EINER KAUTSCHUKZUSAMMENSETZUNG MIT THERMOPLASTISCHEM FÜLLSTOFF

METHOD FOR OBTAINING A RUBBER COMPOSITION INCLUDING A THERMOPLASTIC FILLER

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **02.06.2010 FR 1054295**

(43) Date de publication de la demande:
**10.04.2013 Bulletin 2013/15**

(73) Titulaires:
- **COMPAGNIE GENERALE DES ETABLISSEMENTS MICHELIN**
  **63000 Clermont-Ferrand (FR)**
- **MICHELIN Recherche et Technique S.A.**
  **1763 Granges-Paccot (CH)**

(72) Inventeurs:
- **ABAD, Vincent**
  **63040 Clermont-Ferrand Cedex 9 (FR)**
- **CUSTODERO, Emmanuel**
  **63040 Clermont-Ferrand Cedex 9 (FR)**
- **THOMASSON, Damien**
  **63040 Clermont-Ferrand Cedex 9 (FR)**

(74) Mandataire: **Dequire, Philippe Jean-Marie Denis**
**M.F.P. Michelin**
**23, place des Carmes-Déchaux**
**DGD/PI - F35 - Ladoux**
**63040 Clermont-Ferrand Cedex 09 (FR)**

(56) Documents cités:
**WO-A1-2004/039872**

Il est rappelé que: Dans un délai de neuf mois à compter de la publication de la mention de la délivrance du brevet européen au Bulletin européen des brevets, toute personne peut faire opposition à ce brevet auprès de l'Office européen des brevets, conformément au règlement d'exécution. L'opposition n'est réputée formée qu'après le paiement de la taxe d'opposition. (Art. 99(1) Convention sur le brevet européen).

EP 2 576 664 B1

## Description

La présente invention se rapporte à un procédé de préparation d'une composition de caoutchouc utilisable notamment pour la fabrication de pneumatiques ou de produits semi-finis pour pneumatiques tels que des bandes de roulement, ladite composition étant à base d'un élastomère diénique, d'une charge renforçante, de particules d'un matériau thermoplastique particulier et d'un système de réticulation.

Dans le domaine de la fabrication des pneumatiques et en particulier de la formulation des compositions caoutchouteuses en contact avec le sol, appelées bandes de roulement, on cherche généralement à trouver le meilleur compromis possible entre des performances antagonistes telles que le comportement du véhicule, la résistance au roulement, l'adhérence sur sols sec et humide et l'usure.

En particulier, on souhaiterait diminuer le module dynamique des matériaux constituant les bandes de roulement pour favoriser l'adhérence et l'indentation de la bande de roulement dans le sol, mais en même temps on préférerait des bandes de roulement de très forte rigidité pour améliorer les performances en terme d'usure et de comportement routier.

Toute modification de la formulation des bandes de roulement entraîne des conséquences sur le compromis entre ces performances.

En particulier, il est connu que le compromis ci-dessus peut être amélioré en réalisant des compositions de caoutchouc qui conduisent à des bandes de roulement dont le module d'élasticité diminue fortement en surface suite à une élévation de température. En effet, une telle diminution du module, par exemple lors d'un freinage qui s'accompagne toujours d'une augmentation locale de la température, permet l'augmentation du taux de contact effectif de la bande de roulement avec le sol, notamment rugueux, et par là même des performances liées au contact, notamment l'adhérence au sol et donc la capacité de freinage.

Ce résultat peut être obtenu en introduisant dans une composition de caoutchouc pour la fabrication de pneumatiques, à base d'un ou plusieurs élastomères diéniques, d'une ou plusieurs charges renforçantes et d'un système de réticulation, des particules de matériaux thermoplastiques.

Il est connu du document WO 2004/039872 un procédé de préparation d'une composition à base d'élastomère diénique et de polymère thermoplastique choisi parmi les polymères amorphes de température de transition vitreuse supérieure à 80°C et les polymères cristallins de température de fusion supérieure à 190°C. Le procédé comprend une étape de pré-mélange du polymère thermoplastique avec une portion de l'élastomère diénique pour obtenir un mélange-maître, ce pré-mélange étant effectué à une température égale ou supérieure à la température de transition vitreuse ou égale ou supérieure à la température de fusion diminuée de 20°C, puis une étape de mélange du mélange-maître avec la portion restante de l'élastomère diénique.

Il existe un besoin de fournir un procédé qui permette d'obtenir de telles compositions de caoutchouc pour la fabrication de pneumatiques, comprenant des particules de matériaux thermoplastiques, dans lesquelles les particules sont convenablement dispersées, sans qu'il y ait fusion ni coalescence de ces particules. En particulier, on souhaite disposer d'un procédé qui permette de contrôler la taille de ces particules.

L'invention a donc pour objet un procédé pour préparer une composition de caoutchouc, à base d'un ou plusieurs élastomères diéniques, d'une ou plusieurs charges renforçantes et d'un système de réticulation, comprenant des particules d'un ou plusieurs matériaux thermoplastiques choisis parmi les matériaux thermoplastiques amorphes et les matériaux thermoplastiques semi-cristallins, la température de transition vitreuse du ou desdits matériaux thermoplastiques amorphes et la température de fusion du ou des matériaux thermoplastiques semi-cristallins variant de 80°C à 300°C, lesdites particules présentant un diamètre moyen en volume inférieur ou égal à 200 $\mu$m, comprenant les étapes suivantes :

- incorporer à ou aux élastomères diéniques, au cours d'une première étape dite « non-productive », la ou les charges renforçantes, en malaxant thermomécaniquement le tout, en une ou plusieurs fois, jusqu'à atteindre une température maximale comprise entre 130°C et 200°C,
- refroidir l'ensemble à une température inférieure à 60°C,
- incorporer ensuite, au cours d'une seconde étape dite « productive », le système de réticulation, les particules du ou desdits matériaux thermoplastiques amorphes dont la température de transition vitreuse est inférieure à 200°C et les particules du ou desdits matériaux thermoplastiques semi-cristallins dont la température de fusion est inférieure à 200°C, puis
- malaxer le tout jusqu'à une température maximale inférieure à 80°C,

étant entendu que les particules du ou desdits matériaux thermoplastiques amorphes dont la température de transition vitreuse est supérieure ou égale à 200°C et les particules du ou desdits matériaux thermoplastiques semi-cristallins dont la température de fusion est supérieure ou égale à 200°C sont introduites au cours de la première étape dite « non-productive » ou au cours de la seconde étape dite « productive » ou au cours des deux étapes.

L'invention ainsi que ses avantages seront aisément compris à la lumière de la description et de l'exemple de réalisation qui suit, ainsi que de la figure 1 relative à cet exemple qui représente des courbes de variation de module élastique en fonction de la température pour des compositions de caoutchouc.

**I. Mesures et tests utilisés**

Les caractérisations dynamiques des matériaux élastomères sont réalisées sur un viscoanalyseur (société Métravib VA4000), selon la norme ASTM D5992-96. On enregistre la réponse d'un échantillon de composition vulcanisée (éprouvette cylindrique de 4 mm d'épaisseur et de 400 $mm^2$ de section), soumis à une sollicitation sinusoïdale en cisaillement simple alterné, à une fréquence de 10 Hz, lors d'un balayage en température de 0°C à 150°C avec une rampe de 5°/mn, sous une contrainte maximale de 0,7 MPa. Les résultats exploités sont le module de cisaillement dynamique G* et le facteur de perte tan δ dans la gamme de température donnée. On a :

$$G^* = \sqrt{G'^2 + G''^2} \quad \text{et} \quad \tan\delta = G''/G'$$

G* : module de cisaillement dynamique en MPa ;
G' : module réel de cisaillement en MPa ;
G" : module de perte en MPa ; et
δ : déphasage entre la déformation imposée et la contrainte mesurée.

**II. Conditions de réalisation de l'invention**

Comme expliqué précédemment, la composition obtenue par le procédé selon l'invention est à base d'un ou plusieurs élastomères diéniques, d'une ou plusieurs charges renforçantes, d'un système de réticulation et de particules particulières d'un ou plusieurs matériaux thermoplastiques.

Par l'expression composition « à base de », il faut entendre une composition comportant le mélange et/ou le produit de réaction des différents constituants utilisés, certains de ces constituants de base étant susceptibles de, ou destinés à réagir entre eux, au moins en partie, lors des différentes phases de fabrication de la composition, en particulier au cours de sa réticulation.

Dans la présente description, sauf indication expresse différente, tous les pourcentages (%) sont des % en masse. D'autre part, tout intervalle de valeurs désigné par l'expression "entre a et b" représente le domaine de valeurs allant de plus de a à moins de b (c'est-à-dire bornes a et b exclues) tandis que tout intervalle de valeurs désigné par l'expression "de a à b" signifie le domaine de valeurs allant de a jusqu'à b (c'est-à-dire incluant les bornes strictes a et b).

<u>II-1. Elastomère diénique</u>

Par élastomère ou caoutchouc "diénique", doit être compris de manière connue un élastomère issu au moins en partie (i.e., un homopolymère ou un copolymère) de monomères diènes (monomères porteurs de deux doubles liaisons carbone-carbone, conjuguées ou non).

Ces élastomères diéniques peuvent être classés dans deux catégories : "essentiellement insaturés" ou "essentiellement saturés". On entend en général par "essentiellement insaturé", un élastomère diénique issu au moins en partie de monomères diènes conjugués, ayant un taux de motifs ou unités d'origine diénique (diènes conjugués) qui est supérieur à 15% (% en moles) ; c'est ainsi que des élastomères diéniques tels que les caoutchoucs butyle ou les copolymères de diènes et d'alpha-oléfines type EPDM n'entrent pas dans la définition précédente et peuvent être notamment qualifiés d'élastomères diéniques "essentiellement saturés" (taux de motifs d'origine diénique faible ou très faible, toujours inférieur à 15%). Dans la catégorie des élastomères diéniques "essentiellement insaturés", on entend en particulier par élastomère diénique "fortement insaturé" un élastomère diénique ayant un taux de motifs d'origine diénique (diènes conjugués) qui est supérieur à 50%.

Ces définitions étant données, on entend plus particulièrement par élastomère diénique susceptible d'être utilisé dans les compositions obtenues selon l'invention:

(a) - tout homopolymère obtenu par polymérisation d'un monomère diène conjugué ayant de 4 à 12 atomes de carbone;
(b) - tout copolymère obtenu par copolymérisation d'un ou plusieurs diènes conjugués entre eux ou avec un ou plusieurs composés vinyle aromatique ayant de 8 à 20 atomes de carbone;
(c) - un copolymère ternaire obtenu par copolymérisation d'éthylène, d'une α-oléfine ayant 3 à 6 atomes de carbone

avec un monomère diène non conjugué ayant de 6 à 12 atomes de carbone, comme par exemple les élastomères obtenus à partir d'éthylène, de propylène avec un monomère diène non conjugué du type précité tel que notamment l'hexadiène-1,4, l'éthylidène norbornène, le dicyclopentadiène;

(d) - un copolymère d'isobutène et d'isoprène (caoutchouc butyle), ainsi que les versions halogénées, en particulier chlorées ou bromées, de ce type de copolymère.

Bien qu'elle s'applique à tout type d'élastomère diénique, l'homme du métier du pneumatique comprendra que la présente invention est de préférence mise en oeuvre avec des élastomères diéniques essentiellement insaturés, en particulier du type (a) ou (b) ci-dessus.

A titre de diènes conjugués conviennent notamment le butadiène-1,3, le 2-méthyl-1,3-butadiène, les 2,3-di(alkyle en $C_1$-$C_5$)-1,3-butadiènes tels que par exemple le 2,3-diméthyl-1,3-butadiène, le 2,3-diéthyl-1,3-butadiène, le 2-méthyl-3-éthyl-1,3-butadiène, le 2-méthyl-3-isopropyl-1,3-butadiène, un aryl-1,3-butadiène, le 1,3-pentadiène, le 2,4-hexadiène. A titre de composés vinylaromatique conviennent par exemple le styrène, l'ortho-, méta-, para-méthylstyrène, le mélange commercial "vinyle-toluène", le para-tertiobutylstyrène, les méthoxystyrènes, les chlorostyrènes, le vinylmésitylène, le divinylbenzène, le vinylnaphtalène.

Les copolymères peuvent contenir entre 99% et 20% en poids d'unités diéniques et entre 1% et 80% en poids d'unités vinylaromatique. Les élastomères peuvent avoir toute microstructure qui est fonction des conditions de polymérisation utilisées, notamment de la présence ou non d'un agent modifiant et/ou randomisant et des quantités d'agent modifiant et/ou randomisant employées. Les élastomères peuvent être par exemple à blocs, statistiques, séquencés, microséquencés, et être préparés en dispersion, en émulsion ou en solution ; ils peuvent être couplés et/ou étoilés ou encore fonctionnalisés avec un agent de couplage et/ou d'étoilage ou de fonctionnalisation. Pour un couplage à du noir de carbone, on peut citer par exemple des groupes fonctionnels comprenant une liaison C-Sn ou des groupes fonctionnels aminés tels que aminobenzophénone par exemple ; pour un couplage à une charge inorganique renforçante telle que silice, on peut citer par exemple des groupes fonctionnels silanol ou polysiloxane ayant une extrémité silanol (tels que décrits par exemple dans FR 2 740 778, US 6 013 718 ou WO 2008/141702), des groupes alkoxysilane (tels que décrits par exemple dans FR 2 765 882 ou US 5 977 238), des groupes carboxyliques (tels que décrits par exemple dans WO 01/92402, US 6 815 473, WO 2004/096865 ou US 2006/0089445) ou encore des groupes polyéthers (tels que décrits par exemple dans EP 1 127 909, US 6 503 973, WO 2009/000750 ou WO 2009/000752). Comme autres exemples d'élastomères fonctionnalisés, on peut citer également des élastomères (tels que SBR, BR, NR ou IR) du type époxydés.

Conviennent les polybutadiènes et en particulier ceux ayant une teneur (% molaire) en unités -1,2 comprise entre 4% et 80% ou ceux ayant une teneur (% molaire) en cis-1,4 supérieure à 80%, les polyisoprènes, les copolymères de butadiène-styrène et en particulier ceux ayant une Tg (température de transition vitreuse (Tg, mesurée selon ASTM D3418) comprise entre 0°C et - 70°C et plus particulièrement entre - 10°C et - 60°C, une teneur en styrène comprise entre 5% et 60% en poids et plus particulièrement entre 20% et 50%, une teneur (% molaire) en liaisons -1,2 de la partie butadiénique comprise entre 4% et 75%, une teneur (% molaire) en liaisons trans-1,4 comprise entre 10% et 80%, les copolymères de butadiène-isoprène et notamment ceux ayant une teneur en isoprène comprise entre 5% et 90% en poids et une Tg de - 40°C à - 80°C, les copolymères isoprène-styrène et notamment ceux ayant une teneur en styrène comprise entre 5% et 50% en poids et une Tg comprise entre 5 °C et - 50°C. Dans le cas des copolymères de butadiène-styrène-isoprène conviennent notamment ceux ayant une teneur en styrène comprise entre 5% et 50% en poids et plus particulièrement comprise entre 10% et 40%, une teneur en isoprène comprise entre 15% et 60% en poids et plus particulièrement entre 20% et 50%, une teneur en butadiène comprise entre 5% et 50% en poids et plus particulièrement comprise entre 20% et 40%, une teneur (% molaire) en unités -1,2 de la partie butadiénique comprise entre 4% et 85%, une teneur (% molaire) en unités trans -1,4 de la partie butadiénique comprise entre 6% et 80%, une teneur (% molaire) en unités -1,2 plus -3,4 de la partie isoprénique comprise entre 5% et 70% et une teneur (% molaire) en unités trans -1,4 de la partie isoprénique comprise entre 10% et 50%, et plus généralement tout copolymère butadiène-styrène-isoprène ayant une Tg comprise entre - 5°C et - 70°C.

En résumé, le ou les élastomères diéniques de la composition obtenue selon l'invention sont choisis préférentiellement dans le groupe des élastomères diéniques fortement insaturés constitué par les polybutadiènes (en abrégé "BR"), les polyisoprènes (IR) de synthèse, le caoutchouc naturel (NR), les copolymères de butadiène, les copolymères d'isoprène et les mélanges de ces élastomères. De tels copolymères sont plus préférentiellement choisis dans le groupe constitué par les copolymères de butadiène-styrène (SBR), les copolymères d'isoprène-butadiène (BIR), les copolymères d'isoprène-styrène (SIR) et les copolymères d'isoprène-butadiène-styrène (SBIR), de préférence les copolymères de butadiène-styrène.

Selon un mode de réalisation particulier, l'élastomère diénique est majoritairement (i.e., pour plus de 50 pce) un SBR, qu'il s'agisse d'un SBR préparé en émulsion ("ESBR") ou d'un SBR préparé en solution ("SSBR"), ou un coupage (mélange) SBR/BR, SBR/NR (ou SBR/IR), BR/NR (ou BR/IR), ou encore SBR/BR/NR (ou SBR/BR/IR). Dans le cas d'un élastomère SBR (ESBR ou SSBR), on utilise notamment un SBR ayant une teneur en styrène moyenne, par exemple comprise entre 20% et 35% en poids, ou une teneur en styrène élevée, par exemple de 35 à 45%, une

teneur en liaisons vinyliques de la partie butadiénique comprise entre 15% et 70%, une teneur (% molaire) en liaisons trans-1,4 comprise entre 15% et 75% et une Tg comprise entre - 10°C et - 55°C ; un tel SBR peut être avantageusement utilisé en mélange avec un BR possédant de préférence plus de 90% (% molaire) de liaisons cis-1,4.

Selon un autre mode de réalisation particulier, l'élastomère diénique est majoritairement (pour plus de 50 pce) un élastomère isoprénique. C'est le cas en particulier lorsque les compositions obtenues selon l'invention sont destinées à constituer, dans les pneumatiques, les matrices de caoutchouc de certaines bandes de roulement (par exemple pour véhicules industriels), de nappes d'armature de sommet (par exemple de nappes de travail, nappes de protection ou nappes de frettage), de nappes d'armature de carcasse, de flancs, de bourrelets, de protecteurs, de sous-couches, de blocs de caoutchouc et autres gommes internes assurant l'interface entre les zones précitées des pneumatiques.

Par "élastomère isoprénique", on entend de manière connue un homopolymère ou un copolymère d'isoprène, en d'autres termes un élastomère diénique choisi dans le groupe constitué par le caoutchouc naturel (NR), les polyisoprènes de synthèse (IR), les différents copolymères d'isoprène et les mélanges de ces élastomères. Parmi les copolymères d'isoprène, on citera en particulier les copolymères d'isobutène-isoprène (caoutchouc butyle - IIR), d'isoprène-styrène (SIR), d'isoprène-butadiène (BIR) ou d'isoprène-butadiène-styrène (SBIR). Cet élastomère isoprénique est de préférence du caoutchouc naturel ou un polyisoprène cis-1,4 de synthèse; parmi ces polyisoprènes de synthèse, sont utilisés de préférence des polyisoprènes ayant un taux (% molaire) de liaisons cis-1,4 supérieur à 90%, plus préférentiellement encore supérieur à 98%.

Selon un autre mode de réalisation particulier, notamment lorsqu'elle est destinée à un flanc de pneumatique, à une gomme intérieure étanche de pneumatique sans chambre (ou autre élément imperméable à l'air), la composition obtenue selon l'invention peut contenir au moins un élastomère diénique essentiellement saturé, en particulier au moins un copolymère EPDM ou un caoutchouc butyle (éventuellement chloré ou bromé), que ces copolymères soient utilisés seuls ou en mélange avec des élastomères diéniques fortement insaturés tels que cités précédemment, notamment NR ou IR, BR ou SBR.

Selon un autre mode préférentiel de réalisation de l'invention, la composition de caoutchouc comprend un coupage d'un (un ou plusieurs) élastomère diénique dit "à haute Tg" présentant une Tg comprise entre - 70°C et 0°C et d'un (un ou plusieurs) élastomère diénique dit "à basse Tg" comprise entre -110°C et -80°C, plus préférentiellement entre -105°C et -90°C. L'élastomère à haute Tg est choisi de préférence dans le groupe constitué par les S-SBR, les E-SBR, le caoutchouc naturel, les polyisoprènes de synthèse (présentant un taux (% molaire) d'enchaînements cis-1,4 de préférence supérieur à 95%), les BIR, les SIR, les SBIR, et les mélanges de ces élastomères. L'élastomère à basse Tg comprend de préférence des unités butadiène selon un taux (% molaire) au moins égal à 70% ; il consiste de préférence en un polybutadiène (BR) présentant un taux (% molaire) d'enchaînements cis-1,4 supérieur à 90%.

Selon un autre mode particulier de réalisation de l'invention, la composition de caoutchouc comprend par exemple de 30 à 100 pce, en particulier de 50 à 100 pce, d'un élastomère à haute Tg en coupage avec 0 à 70 pce, en particulier de 0 à 50 pce, d'un élastomère à basse Tg ; selon un autre exemple, elle comporte pour la totalité des 100 pce un ou plusieurs SBR préparé(s) en solution.

Selon un autre mode particulier de réalisation de l'invention, l'élastomère diénique de la composition obtenue selon l'invention comprend un coupage d'un BR (à titre d'élastomère basse Tg) présentant un taux (% molaire) d'enchaînements cis-1,4 supérieur à 90%, avec un ou plusieurs S-SBR ou E-SBR (à titre d'élastomère(s) haute Tg).

La composition obtenue selon l'invention peut contenir un seul élastomère diénique ou un mélange de plusieurs élastomères diéniques, le ou les élastomères diéniques pouvant être utilisés en association avec tout type d'élastomère synthétique autre que diénique, voire avec des polymères autres que des élastomères, par exemple des polymères thermoplastiques.

II-2. Particules de matériau thermoplastique

Comme expliqué précédemment, la composition de caoutchouc obtenue selon l'invention comprend des particules d'un ou plusieurs matériaux thermoplastiques. Le ou les matériaux thermoplastiques sont choisis parmi les matériaux thermoplastiques amorphes et les matériaux thermoplastiques semi-cristallins, la température de transition vitreuse du ou desdits matériaux thermoplastiques amorphes et la température de fusion du ou des matériaux thermoplastiques semi-cristallins variant de 80°C à 300°C.

Les matériaux thermoplastiques sont généralement choisis parmi les polypropylènes, les polyéthylènes, les polystyrènes, les copolymères acrylonitrile/butadiène/styrène, les polyméthylméthacrylates, les polyamides, les polyphénylène éthers, les polycarbonates, les polyacétals, les polyuréthanes thermoplastiques, les polymères thermoplastiques fluorés et les polyesters.

De préférence, les polyesters sont choisis parmi les polyéthylène téréphtalates, les polybutylène téréphtalates et les polyéthylène naphtoates.

Les polymères fluorés peuvent être choisis parmi les copolymères de tétrafluoréthylène et hexafluoropropène, les copolymères de tétrafluoréthylène et perfluorovinyléther, les copolymères de tétrafluoréthylène et d'éthylène et le

polyfluorure de vinylidène.

De préférence, la température de transition vitreuse du ou desdits matériaux thermoplastiques amorphes et la température de fusion du ou des matériaux thermoplastiques semi-cristallins varie de 80°C à 200°C.

Selon l'invention, les particules présentent un diamètre moyen en volume inférieur ou égal à 200 μm, de préférence compris entre 50 et 100 μm.

La détermination de la taille moyenne en volume des particules de matériau thermoplastique a été réalisée avec un compteur Coulter.

Un compteur Coulter est un appareil destiné à compter les particules et les cellules, et à en mesurer la taille. On l'utilise par exemple pour les bactéries, ou pour l'analyse de la distribution de la taille des particules dans la mesure de la qualité de l'air. Le compteur Coulter est commercialisé depuis les années 1950.

Le compteur détecte le changement de la résistance électrique lorsque l'on fait passer un électrolyte contenant des particules ou des cellules au travers d'une petite ouverture que l'on peut calibrer. Les cellules, n'étant elles-mêmes pas conductrices, génèrent de ce fait une variation de la résistance. Cette variation dépend de la taille de chaque particule comptée.

Les particules du ou desdits matériaux thermoplastiques représentent de préférence de 10 à 50 pce, mieux de 20 à 40 pce.

De préférence, les particules représentent au plus 20%, mieux au plus 10%, en volume par rapport au volume total de la composition.

La présence dans la composition de caoutchouc de ces particules de matériaux thermoplastiques dont la température de transition vitreuse pour les matériaux amorphes ou de fusion pour les matériaux semi-cristallins est comprise entre 80°C et 300°C permet le ramollissement de la composition lors de l'élévation de la température, en particulier en cas de freinage. Cela permet d'augmenter la surface de contact de la bande de roulement sur le sol, en particulier rugueux, et donc l'adhérence.

<u>II-3. Charge renforçante</u>

On peut utiliser tout type de charge renforçante connue pour ses capacités à renforcer une composition de caoutchouc utilisable pour la fabrication de pneumatiques, par exemple une charge organique tel que du noir de carbone, une charge inorganique renforçante telle que de la silice, ou encore un coupage de ces deux types de charge, notamment un coupage de noir de carbone et de silice.

Comme noirs de carbone conviennent tous les noirs de carbone, notamment les noirs conventionnellement utilisés dans les pneumatiques (noirs dits de grade pneumatique). Parmi ces derniers, on citera plus particulièrement les noirs de carbone renforçants des séries 100, 200 ou 300 (grades ASTM), comme par exemple les noirs N115, N134, N234, N326, N330, N339, N347, N375, ou encore, selon les applications visées, les noirs de séries plus élevées (par exemple N660, N683, N772). Les noirs de carbone pourraient être par exemple déjà incorporés à l'élastomère isoprénique sous la forme d'un masterbatch (voir par exemple demandes WO 97/36724 ou WO 99/16600).

Comme exemples de charges organiques autres que des noirs de carbone, on peut citer les charges organiques de polyvinylaromatique fonctionnalisé telles que décrites dans les demandes WO-A-2006/069792 et WO-A-2006/069793.

Par "charge inorganique renforçante", doit être entendu dans la présente demande, par définition, toute charge inorganique ou minérale (quelles que soient sa couleur et son origine (naturelle ou de synthèse), encore appelée charge "blanche", charge "claire" voire "charge non noire" ("non-black filler") par opposition au noir de carbone, capable de renforcer à elle seule, sans autre moyen qu'un agent de couplage intermédiaire, une composition de caoutchouc destinée à la fabrication de pneumatiques, en d'autres termes apte à remplacer, dans sa fonction de renforcement, un noir de carbone conventionnel de grade pneumatique ; une telle charge se caractérise généralement, de manière connue, par la présence de groupes hydroxyle (-OH) à sa surface.

L'état physique sous lequel se présente la charge inorganique renforçante est indifférent, que ce soit sous forme de poudre, de microperles, de granulés, de billes ou toute autre forme densifiée appropriée. Bien entendu on entend également par charge inorganique renforçante des mélanges de différentes charges inorganiques renforçantes, en particulier de charges siliceuses et/ou alumineuses hautement dispersibles telles que décrites ci-après.

Comme charges inorganiques renforçantes conviennent notamment des charges minérales du type siliceuse, en particulier de la silice ($SiO_2$), ou du type alumineuse, en particulier de l'alumine ($Al_2O_3$). La silice utilisée peut être toute silice renforçante connue de l'homme du métier, notamment toute silice précipitée ou pyrogénée présentant une surface BET ainsi qu'une surface spécifique CTAB toutes deux inférieures à 450 $m^2$/g, de préférence de 30 à 400 $m^2$/g. A titres de silices précipitées hautement dispersibles (dites "HDS"), on citera par exemple les silices Ultrasil 7000 et Ultrasil 7005 de la société Degussa, les silices Zeosil 1165MP, 1135MP et 1115MP de la société Rhodia, la silice Hi-Sil EZ150G de la société PPG, les silices Zeopol 8715, 8745 et 8755 de la Société Huber, les silices à haute surface spécifique telles que décrites dans la demande WO 03/16837.

Lorsque la composition obtenue selon l'invention est destinée à des bandes de roulement de pneumatique à faible résistance au roulement, la charge inorganique renforçante utilisée, en particulier s'il s'agit de silice, a de préférence une surface BET comprise entre 45 et 400 $m^2/g$, plus préférentiellement comprise entre 60 et 300 $m^2/g$.

De manière préférentielle, le taux de charge renforçante totale (noir de carbone et/ou charge inorganique renforçante telle que silice) est compris entre 20 et 200 pce, plus préférentiellement entre 30 et 150 pce, l'optimum étant de manière connue différent selon les applications particulières visées : le niveau de renforcement attendu sur un pneumatique vélo, par exemple, est bien sûr inférieur à celui exigé sur un pneumatique apte à rouler à grande vitesse de manière soutenue, par exemple un pneu moto, un pneu pour véhicule de tourisme ou pour véhicule utilitaire tel que Poids lourd.

Selon un mode de réalisation préférentiel de l'invention, on utilise une charge renforçante comportant entre 30 et 150 pce, plus préférentiellement entre 50 et 120 pce de charge inorganique, particulièrement de silice, et optionnellement du noir de carbone ; le noir de carbone, lorsqu'il est présent, est utilisé de préférence à un taux inférieur à 20 pce, plus préférentiellement inférieur à 10 pce (par exemple entre 0,1 et 10 pce).

Pour coupler la charge inorganique renforçante à l'élastomère diénique, on utilise de manière connue un agent de couplage (ou agent de liaison) au moins bifonctionnel destiné à assurer une connexion suffisante, de nature chimique et/ou physique, entre la charge inorganique (surface de ses particules) et l'élastomère diénique, en particulier des organosilanes ou des polyorganosiloxanes bifonctionnels.

On utilise notamment des silanes polysulfurés, dits "symétriques" ou "asymétriques" selon leur structure particulière, tels que décrits par exemple dans les demandes WO03/002648 (ou US 2005/016651) et WO03/002649 (ou US 2005/016650).

Conviennent en particulier, sans que la définition ci-après soit limitative, des silanes polysulfurés dits "symétriques" répondant à la formule générale (III) suivante:

(III) $$Z - A - S_x - A - Z ,$$

dans laquelle:

- x est un entier de 2 à 8 (de préférence de 2 à 5) ;
- A est un radical hydrocarboné divalent (de préférence des groupements alkylène en $C_1$-$C_{18}$ ou des groupements arylène en $C_6$-$C_{12}$, plus particulièrement des alkylènes en $C_1$-$C_{10}$, notamment en $C_1$-$C_4$, en particulier le propylène) ;
- Z répond à l'une des formules ci-après:

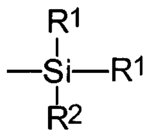 ; 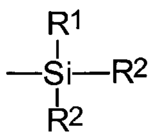 ; 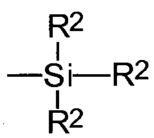 ,

dans lesquelles:

- les radicaux $R^1$, substitués ou non substitués, identiques ou différents entre eux, représentent un groupe alkyle en $C_1$-$C_{18}$, cycloalkyle en $C_5$-$C_{18}$ ou aryle en $C_6$-$C_{18}$ (de préférence des groupes alkyle en $C_1$-$C_6$, cyclohexyle ou phényle, notamment des groupes alkyle en $C_1$-$C_4$, plus particulièrement le méthyle et/ou l'éthyle).
- les radicaux $R^2$, substitués ou non substitués, identiques ou différents entre eux, représentent un groupe alkoxyle en $C_1$-$C_{18}$ ou cycloalkoxyle en $C_5$-$C_{18}$ (de préférence un groupe choisi parmi alkoxyles en $C_1$-$C_8$ et cycloalkoxyles en $C_5$-$C_8$, plus préférentiellement encore un groupe choisi parmi alkoxyles en $C_1$-$C_4$, en particulier méthoxyle et éthoxyle).

Dans le cas d'un mélange d'alkoxysilanes polysulfurés répondant à la formule (III) ci-dessus, notamment des mélanges usuels disponibles commercialement, la valeur moyenne des "x" est un nombre fractionnaire de préférence compris entre 2 et 5, plus préférentiellement proche de 4. Mais l'invention peut être aussi avantageusement mise en oeuvre par exemple avec des alkoxysilanes disulfurés (x = 2).

A titre d'exemples de silanes polysulfurés, on citera plus particulièrement les polysulfures (notamment disulfures, trisulfures ou tétrasulfures) de bis-(alkoxyl($C_1$-$C_4$)-alkyl($C_1$-$C_4$)silyl-alkyl($C_1$-$C_4$)), comme par exemple les polysulfures de bis(3-triméthoxysilylpropyl) ou de bis(3-triéthoxysilylpropyl). Parmi ces composés, on utilise en particulier le tétrasulfure de bis(3-triéthoxysilylpropyl), en abrégé TESPT, de formule $[(C_2H_5O)_3Si(CH_2)_3S_2]_2$ ou le disulfure de bis-(triéthoxysilylpropyle), en abrégé TESPD, de formule $[(C_2H_3O)_3Si(CH_2)_3S]_2$. On citera également à titre d'exemples préférentiels les polysulfures (notamment disulfurés, trisulfures ou tétrasulfures) de bis-(monoalkoxyl($C_1$-$C_4$)-dialk-

yl($C_1$-$C_4$)silylpropyl), plus particulièrement le tétrasulfure de bis-monoéthoxydiméthylsilylpropyl tel que décrit dans la demande de brevet WO 02/083782 (ou US 2004/132880).

A titre d'agent de couplage autre qu'alkoxysilane polysulfuré, on citera notamment des POS (polyorganosiloxanes) bifonctionnels ou encore des polysulfures d'hydroxysilane ($R^2$ = OH dans la formule III ci-dessus) tels que décrits dans les demandes de brevet WO 02/30939 (ou US 6,774,255) et WO 02/31041 (ou US 2004/051210), ou encore des silanes ou POS porteurs de groupements fonctionnels azo-dicarbonyle, tels que décrits par exemple dans les demandes de brevet WO 2006/125532, WO 2006/125533, WO 2006/125534.

Dans les compositions de caoutchouc obtenues selon l'invention, la teneur en agent de couplage est préférentiellement comprise entre 4 et 12 pce, plus préférentiellement entre 3 et 8 pce.

L'homme du métier comprendra qu'à titre de charge équivalente de la charge inorganique renforçante décrite dans le présent paragraphe, pourrait être utilisée une charge renforçante d'une autre nature, notamment organique, dès lors que cette charge renforçante serait recouverte d'une couche inorganique telle que silice, ou bien comporterait à sa surface des sites fonctionnels, notamment hydroxyles, nécessitant l'utilisation d'un agent de couplage pour établir la liaison entre la charge et l'élastomère.

II.4 Système de réticulation

Le système de réticulation proprement dit est à base de soufre (ou d'un agent donneur de soufre) et d'un accélérateur primaire de réticulation. A ce système de réticulation de base viennent s'ajouter, incorporés au cours de la première phase non-productive et/ou au cours de la phase productive telles que décrites ultérieurement, divers accélérateurs secondaires ou activateurs de réticulation connus tels qu'oxyde de zinc, acide stéarique ou composés équivalents, dérivés guanidiques (en particulier diphénylguanidine).

Le soufre est utilisé à un taux préférentiel compris entre 0,5 et 10 pce, plus préférentiellement compris entre 0,5 et 5 pce, en particulier entre 0,5 et 3 pce lorsque la composition obtenue selon l'invention est destinée, selon un mode préférentiel de l'invention, à constituer une bande de roulement de pneumatique.

L'accélérateur primaire de réticulation est quant à lui utilisé à un taux préférentiel variant de 0,5 à 10 pce, plus préférentiellement compris de 0,5 à 5 pce.

L'accélérateur primaire de réticulation doit permettre une réticulation des compositions de caoutchouc dans des temps industriellement acceptables, tout en préservant un délai minimum de sécurité (« temps de grillage ») au cours duquel les compositions peuvent être mises en forme sans risque de réticulation prématurée (« grillage »).

On peut utiliser tout compose susceptible d'agir comme accélérateur de réticulation des élastomères diéniques en présence de soufre.

Conviennent en particulier les accélérateurs du type thiazoles ainsi que leurs dérivés de formule (I) :

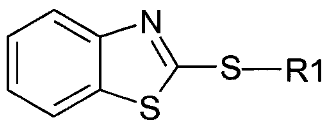

(I)

dans laquelle $R^1$ représente un atome d'hydrogène, un groupement 2-mercapto benzothiazyle de formule (II) :

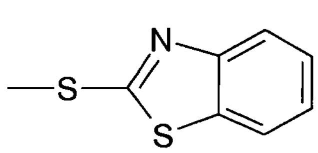

(II)

ou encore un groupement de formule (III) :

$-NR^2R^3$ (III)

dans laquelle $R^2$ et $R^3$ représentent indépendamment un atome d'hydrogène, un groupement 2-mercaptobenzothiazyle (formule (II)), un groupement alkyle en $C_1$-$C_4$ ou un groupement cycloalkyle en $C_5$-$C_8$, comportant de préférence 6 maillons, ledit cycle pouvant comporter au moins un hétéroatome tel que S, O ou N.

Des accélérateurs thiazoles et dérivés préférentiels sont notamment choisis dans le groupe constitué par le 2-mercaptobenzothiazole, le disulfure de 2-mercapto-benzothiazyle (en abrégé « MBTS »), le N-cyclohexyl-2-benzothiazyle sulfénamide (en abrégé « CBS »), le N,N-dicyclohexyl-2-benzothiazyle sulfénamide (en abrégé « DCBS »), le N-ter-butyl-2-benzothiazyle sulfénamide (en abrégé « TBBS »), le N-cyclohexyl-2-benzothiazyle sulfénimide, le N-ter-butyl-2-benzothiazyle sulfénimide (en abrégé « TBSI ») et les mélanges de ces composés.

Le système de réticulation de la composition obtenue selon l'invention peut également comprendre un ou plusieurs accélérateurs primaires additionnels, en particulier les composés de la famille des thiurames, les dérivés dithiocarbamates de zinc ou les thiophosphates.

II-5. Additifs divers

La composition de caoutchouc obtenue selon l'invention peut comporter également tout ou partie des additifs usuels habituellement utilisés dans les compositions d'élastomères destinées à la fabrication de pneumatiques, en particulier de bandes de roulement, comme par exemple des plastifiants ou des huiles d'extension, que ces derniers soient de nature aromatique ou non-aromatique, des pigments, des agents de protection tels que cires anti-ozone (telle que la Cire Ozone C32 ST), anti-ozonants chimiques, anti-oxydants (tel que la 6-paraphénylènediamine), des agents anti-fatigue, des résines renforçantes, des accepteurs (par exemple résine phénolique novolaque) ou des donneurs de méthylène (par exemple HMT ou H3M) tels que décrits par exemple dans la demande WO 02/10269.

De préférence, la composition obtenue selon l'invention comporte, à titre d'agent plastifiant préférentiel non aromatique ou très faiblement aromatique, au moins un composé choisi dans le groupe constitué par les huiles naphténiques, paraffiniques, huiles MES, huiles TDAE, les esters (en particulier trioléates) de glycérol, les résines plastifiantes hydrocarbonées présentant une haute Tg de préférence supérieure à 30°C, et les mélanges de tels composés.

La composition obtenue selon l'invention peut également contenir, en complément des agents de couplage, des activateurs de couplage, des agents de recouvrement de la charge inorganique renforçante ou plus généralement des agents d'aide à la mise en oeuvre susceptibles de manière connue, grâce à une amélioration de la dispersion de la charge inorganique dans la matrice de caoutchouc et à un abaissement de la viscosité des compositions, d'améliorer leur faculté de mise en oeuvre à l'état cru, ces agents étant par exemple des silanes hydrolysables tels que des alkylalkoxysilanes (notamment des alkyltriéthoxysilanes), des polyols, des polyéthers (par exemple des polyéthylèneglycols), des aminés primaires, secondaires ou tertiaires (par exemple des trialcanol-amines), des POS hydroxylés ou hydrolysables, par exemple des $\alpha,\omega$-dihydroxy-polyorganosiloxanes (notamment des $\alpha,\omega$-dihydroxy-polydiméthylsiloxanes), des acides gras comme par exemple l'acide stéarique.

II-6. Fabrication des compositions de caoutchouc

La composition de caoutchouc obtenue selon l'invention est fabriquée dans des mélangeurs appropriés, en utilisant deux phases de préparation successives selon une procédure générale bien connue de l'homme du métier : une première phase de travail ou malaxage thermo-mécanique (parfois qualifiée de phase "non-productive") à haute température, jusqu'à une température maximale comprise entre 130°C et 200°C, de préférence entre 145°C et 185°C, suivie d'une seconde phase de travail mécanique (parfois qualifiée de phase "productive") à plus basse température, typiquement inférieure à 120°C, par exemple entre 60°C et 100°C, phase de finition au cours de laquelle est incorporé le système de réticulation ou vulcanisation.

Selon un mode de réalisation préférentiel de l'invention, tous les constituants de base de la composition obtenue selon l'invention, à l'exception du système de réticulation, des particules du ou des matériaux thermoplastiques amorphes dont la température de transition vitreuse est inférieure à 200°C et des particules du ou des matériaux thermoplastiques semi-cristallins dont la température de fusion est inférieure à 200°C, à savoir la ou les charges renforçantes, éventuellement les particules du ou des matériaux thermoplastiques amorphes dont la température de transition vitreuse est supérieure ou égale à 200°C et éventuellement les particules du ou des matériaux thermoplastiques semi-cristallins dont la température de fusion est supérieure ou égale à 200°C, et l'agent de couplage le cas échéant, sont incorporés de manière intime, par malaxage, à l'élastomère diénique ou aux élastomères diéniques au cours de la première phase dite non-productive, c'est-à-dire que l'on introduit dans le mélangeur et que l'on malaxe thermomécaniquement, en une ou plusieurs étapes, au moins ces différents constituants de base jusqu'à atteindre la température maximale comprise entre 130°C et 200°C, de préférence comprise entre 145°C et 185°C.

A titre d'exemple, la première phase (non-productive) est conduite en une seule étape thermomécanique au cours de laquelle on introduit, dans un mélangeur approprié tel qu'un mélangeur interne usuel, tous les constituants nécessaires, les éventuels agents de recouvrement ou de mise en oeuvre complémentaires et autres additifs divers, ainsi que les particules du ou des matériaux thermoplastiques amorphes dont la température de transition vitreuse est supérieure à 200°C, voire supérieure à 180°C et des particules du ou des matériaux thermoplastiques semi-cristallins dont la température de fusion est supérieure à 200°C, voire supérieure à 180°C, à l'exception du système de réticulation. La durée totale du malaxage, dans cette phase non-productive, est de préférence comprise entre 1 et 15 min. Après refroidissement du mélange ainsi obtenu au cours de la première phase non-productive, on incorpore alors le système de réticulation, les particules du ou des matériaux thermoplastiques amorphes dont la température de transition vitreuse

est inférieure à 200°C et les particules du ou des matériaux thermoplastiques semi-cristallins dont la température de fusion est inférieure à 200°C. A basse température, généralement dans un mélangeur externe tel qu'un mélangeur à cylindres; le tout est alors mélangé (phase productive) pendant quelques minutes, par exemple entre 2 et 15 min.

Les particules du ou des matériaux thermoplastiques amorphes dont la température de transition vitreuse est inférieure à 200°C (et surtout inférieure à 180°C) et les particules du ou des matériaux thermoplastiques semi-cristallins dont la température de fusion est inférieure à 200°C (et surtout inférieure à 180°C) ne doivent pas être introduites lors de la phase non-productive qui se fait à température élevée, puisque l'on veut éviter la fusion et/ou la coalescence des particules thermoplastiques après leur introduction dans le mélangeur.

La composition finale ainsi obtenue est ensuite calandrée par exemple sous la forme d'une feuille ou d'une plaque, notamment pour une caractérisation au laboratoire, ou encore extrudée sous la forme d'un profilé de caoutchouc utilisable par exemple comme une bande de roulement de pneumatique pour véhicule tourisme.

La composition obtenue selon l'invention peut être utilisée pour la fabrication d'un article fini ou d'un produit semi-fini destiné à un système de liaison au sol de véhicule automobile, tel que pneumatique, appui interne de sécurité pour pneumatique, roue, ressort en caoutchouc, articulation élastomérique, autre élément de suspension et anti-vibratoire. En particulier, la composition obtenue selon l'invention peut être utilisée pour la fabrication de produits semi-finis en caoutchouc destinés à des pneumatiques, tel que les bandes de roulement, les nappes d'armature de sommet, les flancs, les nappes d'armature de carcasse, les bourrelets, les protecteurs, les sous-couches, les blocs de caoutchouc et autres gommes internes, notamment les gommes de découplage, destinés à assurer la liaison ou l'interface entre les zones précitées des pneumatiques.

Les pneumatiques comprenant une composition obtenue selon l'invention sont notamment destinés à des véhicules tourisme comme à des véhicules industriels choisis parmi camionnettes, « Poids-lourd »-i.e. métro, bus, engins de transport routier (camions, tracteurs, remorques), véhicules hors-la-route -, engin agricoles ou de génie civil, avions, autres véhicules de transport ou de manutention.

## III. Exemple de réalisation de l'invention

### III-1. Préparation des compositions

On procède pour les essais qui suivent de la manière suivante: on introduit dans un mélangeur interne, rempli à 70% et dont la température initiale de cuve est d'environ 90°C, le ou les élastomères diéniques, la ou les charges renforçantes, l'agent de couplage éventuel puis, après une à deux minutes de malaxage, les divers autres ingrédients à l'exception du système de réticulation et des particules du matériau thermoplastique. On conduit alors un travail thermomécanique (phase non-productive) en une étape (durée totale du malaxage égale à environ 5 min), jusqu'à atteindre une température maximale de "tombée" d'environ 165°C. On récupère le mélange ainsi obtenu, on le refroidit puis on ajoute le système de réticulation (soufre et composé thiazole) et les particules de matériau thermoplastique éventuelles sur un mélangeur externe (homo-finisseur) à 70°C, en mélangeant le tout (phase productive) pendant environ 5 à 6 min.

Les compositions ainsi obtenues sont ensuite calandrées soit sous la forme de plaques (épaisseur de 2 à 3 mm) ou de feuilles fines de caoutchouc pour la mesure de leurs propriétés physiques ou mécaniques, soit sous la forme de profilés utilisables directement, après découpage et/ou assemblage aux dimensions souhaitées, par exemple comme produits semi-finis pour pneumatiques, en particulier comme bandes de roulement de pneumatiques.

### III-2 Essais de caractérisation - Résultats

L'objet de cet exemple est de comparer les propriétés dynamiques d'une composition de caoutchouc utilisable pour la fabrication d'une bande de roulement de pneumatique comprenant des particules de polystyrène (composition 2) avec les propriétés d'une composition de caoutchouc n'en comprenant pas (composition 1).

Les formulations des compositions de caoutchouc sont données dans le tableau 1. Les quantités sont exprimées en parties pour 100 parties en poids d'élastomère (pce).

Les taux d'huile et de résine plastifiante ont été ajustés pour obtenir sensiblement le même module dynamique G' à température ambiante.

Tableau 1

| | | Composition 1 | Composition 2 |
|---|---|---|---|
| MI | SBR 1 (1) | 40 | 40 |
| | SBR 2 (2) | 60 | 60 |
| | noir de carbone (3) | 4 | 4 |
| | silice (4) | 92 | 92 |
| | antioxydant (5) | 2 | 2 |
| | huile plastifiante (6) | 21 | 29 |
| | cire anti-ozone (7) | 1,5 | 1,5 |
| | résine plastifiante (8) | 21 | 29 |
| | agent de couplage (9) | 7,4 | 7,4 |
| | acide stéarique (10) | 2 | 2 |
| | DPG (11) | 1,5 | 1,5 |
| | oxyde de zinc (12) | 2,8 | 2,8 |
| ME | accélérateur (13) | 2,1 | 2,1 |
| | CTP (14) | 0,15 | 0,15 |
| | Soufre | 1,4 | 1,4 |
| | particules de polystyrène (15) | - | 30 |

MI : mélangeur interne
ME : mélangeur externe
(1) SSBR avec 40% de styrène (% massique en styrène / totalité du polymère), 24% de motifs polybutadiène 1-2 et 48% de motifs polybutadiène 1-4 trans (% en motifs 1,2 ou 1,4 / totalité du polybutadiène) ;
(2) SSBR avec 28% de styrène, 4% de motifs polybutadiène 1-2 et 81% de motifs polybutadiène 1-4 trans (% en motifs 1,2 ou 1,4 / totalité du polybutadiène) ;
(3) noir de carbone N234 (grade ASTM - société Degussa) ;
(4) silice «Zéosil 1165MP» de la société Rhodia sous forme de microperles (BET et CTAB : environ 150-160 $m^2/g$) ;
(5) N-1,3-diméthylbutyl-N-phénylparaphénylènediamine (« Santoflex 6-PPD » de la société Flexsys) ;
(6) huile TDAE (Treated Distillate Aromatic Extracts) ;
(7) mélange de cires anti-ozone macro- et microcristallines ;
(8) résine hydrocarbonée type C5/C9 (« Escorez » de la société Exxon) ;
(9) TESPT (« Si69 » de la société Degussa) ;
(10) stéarine (« Pristerene 4931 » - société Uniqema) ;
(11) diphénylguanidine (« Perkacit DPG » de la société Flexsys) ;
(12) oxyde de zinc (grade industriel - société Umicore) ;
(13) N-cyclohexyl-2-benzothiazyl-sulfénamide (« Santocure CBS » de la société Flexsys) ;
(14) Cyclohexylthiopthalimide (PVI) ;
(15) « Primecast 101 » (société EOS GmbH) ; Tg = 105 °C, diamètre moyen volumique : 80 $\mu$m (données fournisseur).

On mesure l'évolution du module dynamique G' de chaque composition en fonction de la température, sous une contrainte de 0,7 MPa.

Résultats

Les résultats sont donnés sur la figure 1.

La courbe C1 représente la variation du module élastique de la composition 1 (composition témoin), la courbe C2 représente la variation du module élastique de la composition 2 selon l'invention.

On constate une forte diminution du module au-delà de 80°C.

Ainsi, par exemple :

$(G'_{40°C}-G'_{140°C})/G'_{40°C} = 31\%$ pour la composition 1 (composition témoin)

$(G'_{40°C}-G'_{140°C})/G'_{40°C} = 64\%$ pour la composition 2 selon l'invention.

Ainsi, l'introduction de particules de polystyrène dans la composition de caoutchouc permet un ramollissement de celle-ci à haute température.

## Revendications

1. Procédé pour préparer une composition de caoutchouc utilisable notamment pour la fabrication de pneumatiques, à base d'un ou plusieurs élastomères diéniques, d'une ou plusieurs charges renforçantes et d'un système de réticulation, comprenant des particules d'un ou plusieurs matériaux thermoplastiques choisis parmi les matériaux thermoplastiques amorphes et les matériaux thermoplastiques semi-cristallins, la température de transition vitreuse du ou desdits matériaux thermoplastiques amorphes et la température de fusion du ou des matériaux thermoplastiques semi-cristallins variant de 80°C à 300°C, lesdites particules présentant un diamètre moyen en volume inférieur ou égal à 200 μm, **caractérisé en ce qu'**il comprend les étapes suivantes :

   - incorporer à ou aux élastomères diéniques, au cours d'une première étape dite « non-productive », la ou les charges renforçantes, en malaxant thermomécaniquement le tout, en une ou plusieurs fois, jusqu'à atteindre une température maximale comprise entre 130°C et 200°C,
   - refroidir l'ensemble à une température inférieure à 60°C,
   - incorporer ensuite, au cours d'une seconde étape dite « productive », le système de réticulation, les particules du ou desdits matériaux thermoplastiques amorphes dont la température de transition vitreuse est inférieure à 200°C et les particules du ou desdits matériaux thermoplastiques semi-cristallins dont la température de fusion est inférieure à 200°C puis
   - malaxer le tout jusqu'à une température maximale inférieure à 80°C,

   étant entendu que les particules du ou desdits matériaux thermoplastiques amorphes dont la température de transition vitreuse est supérieure ou égale à 200°C et les particules du ou desdits matériaux thermoplastiques semi-cristallins dont la température de fusion est supérieure ou égale à 200°C sont introduites au cours de la première étape dite « non-productive » ou au cours de la seconde étape dite « productive » ou au cours des deux étapes.

2. Procédé selon la revendication 1, **caractérisé en ce que** le ou les matériaux thermoplastiques sont choisis parmi les polypropylènes, les polyéthylènes, les polystyrènes, les copolymères acrylonitrile/butadiène/styrène, les polyméthylméthacrylates, les polyamides, les polyphénylène éthers, les polycarbonates, les polyacétals, les polyuréthannes thermoplastiques, les polymères thermoplastiques fluorés et les polyesters.

3. Procédé selon la revendication 2, **caractérisé en ce que** les polyesters sont choisis parmi les polyéthylène téréphtalates, les polybutylène téréphtalates et les polyéthylène naphtoates.

4. Procédé selon l'une des revendications 2 et 3, **caractérisé en ce que** les polymères fluorés sont choisis parmi les copolymères de tétrafluoréthylène et hexafluoropropène, les copolymères de tétrafluoréthylène et perfluorovinyléther, les copolymères de tétrafluoréthylène et d'éthylène et le polyfluorure de vinylidène.

5. Procédé selon l'une quelconque des revendications précédentes, **caractérisé en ce que** la température de transition

vitreuse du ou desdits matériaux thermoplastiques amorphes et la température de fusion du ou des matériaux thermoplastiques semi-cristallins varie de 80°C à 200°C.

**6.** Procédé selon l'une quelconque des revendications précédentes **caractérisé en ce que** les particules présentent un diamètre moyen en volume compris entre 50 et 100 μm.

**7.** Procédé selon l'une quelconque des revendications précédentes, **caractérisé en ce que** les particules du ou desdits matériaux thermoplastiques représentent de 10 à 50 pce, de préférence de 20 à 40 pce.

**8.** Procédé selon l'une quelconque des revendications précédentes, **caractérisé en ce que** le ou les élastomères diéniques sont choisis dans le groupe constitué par les polybutadiènes, le caoutchouc naturel, les polyisoprènes de synthèse, les copolymères de butadiène, les copolymères d'isoprène et les mélanges de ces élastomères.

**9.** Procédé selon la revendication 8, **caractérisé en ce que** l'élastomère diénique est un copolymère de butadiène-styrène.

**10.** Procédé selon l'une quelconque des revendications précédentes, **caractérisé en ce que** la ou les charges renforçantes sont choisies parmi la silice, le noir de carbone et leurs mélanges.

**11.** Procédé selon l'une quelconque des revendications précédentes, **caractérisé en ce que** la ou les charges renforçantes sont présentes à un taux compris entre 20 et 200 pce, de préférence entre 30 et 150 pce.

## Patentansprüche

**1.** Verfahren zur Herstellung einer Kautschukzusammensetzung, die insbesondere zur Herstellung von Reifen verwendet werden kann, auf Basis eines oder mehrerer Dienelastomere, eines oder mehrerer verstärkender Füllstoffe und eines Vernetzungssystems, umfassend Teilchen aus einem oder mehreren thermoplastischen Materialien, ausgewählt aus amorphen thermoplastischen Materialien und teilkristallinen thermoplastischen Materialien, wobei die Glasübergangstemperatur des amorphen thermoplastischen Materials bzw. der amorphen thermoplastischen Materialien und die Schmelztemperatur des teilkristallinen thermoplastischen Materials bzw. der teilkristallinen thermoplastischen Materialien von 80°C bis 300°C variiert, wobei die Teilchen einen volumenmittleren Durchmesser kleiner gleich 200 μm aufweisen, **dadurch gekennzeichnet, dass** man:

- im Lauf eines ersten, als "nichtproduktiv" bezeichneten Schritts in das Dienelastomer bzw. die Dienelastomere den verstärkenden Füllstoff bzw. die verstärkenden Füllstoffe einarbeitet, indem man das Ganze ein- oder mehrmals thermomechanisch knetet, bis eine Höchsttemperatur zwischen 130°C und 200°C erreicht ist,
- das Ganze auf eine Temperatur von weniger als 60°C abkühlt,
- dann im Lauf eines zweiten, als "produktiv" bezeichneten Schritts das Vernetzungssystem, die Teilchen aus dem amorphen thermoplastischen Material bzw. den amorphen thermoplastischen Materialien, dessen bzw. deren Glasübergangstemperatur weniger als 200°C beträgt, und die Teilchen aus dem teilkristallinen thermoplastischen Material bzw. den teilkristallinen thermoplastischen Materialien, dessen bzw. deren Schmelztemperatur weniger als 200°C beträgt, einarbeitet, dann
- das Ganze bis zu einer Höchsttemperatur von weniger als 80°C knetet,

mit der Maßgabe, dass die Teilchen aus dem amorphen thermoplastischen Material bzw. den amorphen thermoplastischen Materialien, dessen bzw. deren Glasübergangstemperatur größer gleich 200°C ist, und die Teilchen aus dem teilkristallinen thermoplastischen Material bzw. den teilkristallinen thermoplastischen Materialien, dessen bzw. deren Schmelztemperatur größer gleich 200°C ist, im Lauf des ersten, als "nichtproduktiv" bezeichneten Schritts oder im Lauf des zweiten, als "produktiv" bezeichneten Schritts oder im Lauf beider Schritte eingearbeitet werden.

**2.** Verfahren nach Anspruch 1, **dadurch gekennzeichnet, dass** man das thermoplastische Material bzw. die thermoplastischen Materialien aus Polypropylenen, Polyethylenen, Polystyrolen, Acrylnitril/Butadien/Styrol-Copolymeren, Polymethylmethacrylaten, Polyamiden, Polyphenylenethern, Polycarbonaten, Polyacetalen, thermoplastischen Polyurethanen, thermoplastischen Fluorpolymeren und Polyestern auswählt.

**3.** Verfahren nach Anspruch 2, **dadurch gekennzeichnet, dass** man die Polyester aus Polyethylenterephthalaten, Polybutylenterephthalaten und Polyethylennaphthoaten auswählt.

4. Verfahren nach einem der Ansprüche 2 und 3, **dadurch gekennzeichnet, dass** man die Fluorpolymere aus Copolymeren von Tetrafluorethylen und Hexafluorpropen, Copolymeren von Tetrafluorethylen und Perfluorvinylether, Copolymeren von Tetrafluorethylen und Ethylen und Polyvinylidenfluorid auswählt.

5. Verfahren nach einem der vorhergehenden Ansprüche, **dadurch gekennzeichnet, dass** die Glasübergangstemperatur des amorphen thermoplastischen Materials bzw. der amorphen thermoplastischen Materialien und die Schmelztemperatur des teilkristallinen thermoplastischen Materials bzw. der teilkristallinen thermoplastischen Materialien von 80°C bis 200°C variiert.

6. Verfahren nach einem der vorhergehenden Ansprüche, **dadurch gekennzeichnet, dass** die Teilchen einen volumenmittleren Durchmesser zwischen 50 und 100 μm aufweisen.

7. Verfahren nach einem der vorhergehenden Ansprüche, **dadurch gekennzeichnet, dass** die Teilchen aus dem thermoplastischen Material bzw. den thermoplastischen Materialien 10 bis 50 phe und vorzugsweise 20 bis 40 phe ausmachen.

8. Verfahren nach einem der vorhergehenden Ansprüche, **dadurch gekennzeichnet, dass** man das Dienelastomer bzw. die Dienelastomere aus der Gruppe bestehend aus Polybutadienen, Naturkautschuk, synthetischen Polyisoprenen, Butadien-Copolymeren, IsoprenCopolymeren und Mischungen dieser Elastomere auswählt.

9. Verfahren nach Anspruch 8, **dadurch gekennzeichnet, dass** es sich bei dem Dienelastomer um ein Butadien-Styrol-Copolymer handelt.

10. Verfahren nach einem der vorhergehenden Ansprüche, **dadurch gekennzeichnet, dass** man den verstärkenden Füllstoff bzw. die verstärkenden Füllstoffe aus Kieselsäure, Ruß und Mischungen davon auswählt.

11. Verfahren nach einem der vorhergehenden Ansprüche, **dadurch gekennzeichnet, dass** der verstärkende Füllstoff bzw. die verstärkenden Füllstoffe in einen Gehalt zwischen 20 und 200 phe und vorzugsweise zwischen 30 und 150 phe vorliegt bzw. vorliegen.

## Claims

1. Process for preparing a rubber composition which can be used in particular in the manufacture of tyres, based on one or more diene elastomers, on one or more reinforcing fillers and on a crosslinking system, comprising particles of one or more thermoplastic materials chosen from amorphous thermoplastic materials and semicrystalline thermoplastic materials, the glass transition temperature of the said amorphous thermoplastic material or materials and the melting point of the semicrystalline thermoplastic material or materials varying from 80°C to 300°C, the said particles exhibiting a volume-average diameter of less than or equal to 200 μm, **characterized in that** it comprises the following stages:

   - incorporating in the diene elastomer or elastomers, during a first "non-productive" stage, the reinforcing filler or fillers, everything being kneaded thermomechanically, in one or more goes, until a maximum temperature of between 130°C and 200°C is reached,
   - cooling the combined mixture to a temperature of less than 60°C,
   - subsequently incorporating, during a second "productive" stage, the crosslinking system, the particles of the said amorphous thermoplastic material or materials, the glass transition temperature of which is less than 200°C, and the particles of the said semicrystalline thermoplastic material or materials, the melting point of which is less than 200°C, then
   - kneading everything up to a maximum temperature of less than 80°C,

   it being understood that the particles of the said amorphous thermoplastic material or materials, the glass transition temperature of which is greater than or equal to 200°C, and the particles of the said semicrystalline thermoplastic material or materials, the melting point of which is greater than or equal to 200°C, are introduced during the first "non-productive" stage or during the second "productive" stage or during both stages.

2. Process according to Claim 1, **characterized in that** the thermoplastic material or materials are chosen from polypropylenes, polyethylenes, polystyrenes, acrylonitrile/butadiene/styrene copolymers, polymethyl methacrylates,

polyamides, polyphenylene ethers, polycarbonates, polyacetals, thermoplastic polyurethanes, thermoplastic fluoropolymers and polyesters.

**3.** Process according to Claim 2, **characterized in that** the polyesters are chosen from polyethylene terephthalates, polybutylene terephthalates and polyethylene naphthoates.

**4.** Process according to either of Claims 2 and 3, **characterized in that** the fluoropolymers are chosen from copolymers of tetrafluoroethylene and hexafluoropropene, copolymers of tetrafluoroethylene and perfluorovinyl ether, copolymers of tetrafluoroethylene and ethylene, and polyvinylidene fluoride.

**5.** Process according to any one of the preceding claims, **characterized in that** the glass transition temperature of the said amorphous thermoplastic material or materials and the melting point of the semicrystalline thermoplastic material or materials vary from 80°C to 200°C.

**6.** Process according to any one of the preceding claims, **characterized in that** the particles exhibit a volume-average diameter of between 50 and 100 μm.

**7.** Process according to any one of the preceding claims, **characterized in that** the particles of the said thermoplastic material or materials represent from 10 to 50 phr, preferably from 20 to 40 phr.

**8.** Process according to any one of the preceding claims, **characterized in that** the diene elastomer or elastomers are chosen from the group consisting of polybutadienes, natural rubber, synthetic polyisoprenes, butadiene copolymers, isoprene copolymers and the mixtures of these elastomers.

**9.** Process according to Claim 8, **characterized in that** the diene elastomer is a butadiene/styrene copolymer.

**10.** Process according to any one of the preceding claims, **characterized in that** the reinforcing filler or fillers are chosen from silica, carbon black and their mixtures.

**11.** Process according to any one of the preceding claims, **characterized in that** the reinforcing filler or fillers are present at a content of between 20 and 200 phr, preferably between 30 and 150 phr.

FIG.1

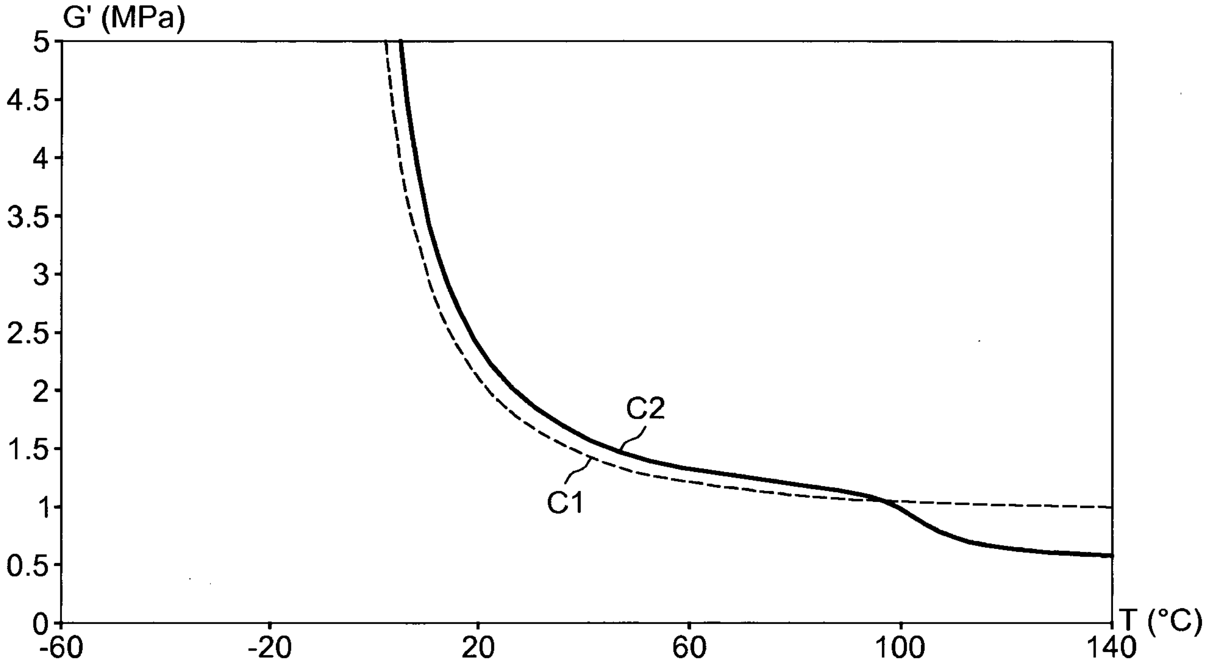

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

### Documents brevets cités dans la description


- WO 2004039872 A
- FR 2740778
- US 6013718 A
- WO 2008141702 A
- FR 2765882
- US 5977238 A
- WO 0192402 A
- US 6815473 B
- WO 2004096865 A
- US 20060089445 A
- EP 1127909 A
- US 6503973 B
- WO 2009000750 A
- WO 2009000752 A
- WO 9736724 A
- WO 9916600 A
- WO 2006069792 A
- WO 2006069793 A
- WO 0316837 A
- WO 03002648 A
- US 2005016651 A
- WO 03002649 A
- US 2005016650 A
- WO 02083782 A
- US 2004132880 A
- WO 0230939 A
- US 6774255 B
- WO 0231041 A
- US 2004051210 A
- WO 2006125532 A
- WO 2006125533 A
- WO 2006125534 A
- WO 0210269 A